Europäisches Patentamt

European Patent Office

Office européen des brevets

(11) Veröffentlichungsnummer: **0 405 124 A2**

# EUROPÄISCHE PATENTANMELDUNG

(21) Anmeldenummer: 90109448.2

(22) Anmeldetag: 18.05.90

(51) Int. Cl.⁵: **F23G 5/08**, F23G 5/14, F23G 7/00

(30) Priorität: 24.06.89 DE 3920760

(43) Veröffentlichungstag der Anmeldung:
02.01.91 Patentblatt 91/01

(84) Benannte Vertragsstaaten:
CH DE FR GB LI NL

(71) Anmelder: Klöckner-Humboldt-Deutz
Aktiengesellschaft
Deutz-Mülheimer-Strasse 111 Postfach 80 05
09
D-5000 Köln 80(DE)

(72) Erfinder: Hilbrans, Hermann, Dr.
Gladbacher Strasse 61
D-4018 Langenfeld(DE)
Erfinder: Paternoga, Paul
Holunderweg 8
D-5207 Ruppichteroth(DE)

(54) Verfahren zur thermischen Entsorgung von Abfallstoffen bzw. Reststoffen wie z.B. Aschen, Klärschlamm oder dergleichen.

(57) Zur wirtschaftlichen thermischen Entsorgung von umweltbelastende Elemente enthaltenden Abfallstoffen bzw. Reststoffen wie z. B. Räumaschen, Klärschlamm oder dergleichen, ohne die zu entsorgenden Stoffe vorher zerkleinern und/oder trocknen zu müssen, wird erfindungsgemäß vorgeschlagen, die Abfallstoffe bzw. Reststoffe (10) auf die Oberfläche (13) einer Schlackenschmelze (14) eines Herdofens (15) aufzugeben und zu schmelzen, den in den Stoffen enthaltenen Kohlenstoff durch Aufblasen eines $O_2$-haltigen Gases (16) unter Bildung einer reduzierenden Atmosphäre zu verbrennen, in welcher oxidische Stoffkomponenten wie Zink und/oder Blei reduzierend verflüchtigt werden, das Abgas wenigstens zwei Sekunden lang auf einer Temperatur von wenigstens 800° C bzw. wenigstens 1.200° C zu halten und unter Zufuhr eines weiteren $O_2$-haltigen Gases (20) unter Ausfall von staubförmigem Zink und/oder Blei nachzuverbrennen.

# VERFAHREN ZUR THERMISCHEN ENTSORGUNG VON ABFALLSTOFFEN BZW. RESTSTOFFEN WIE Z. B. ASCHEN, KLÄRSCHLAMM ODER DERGLEICHEN

Die Erfindung betrifft ein Verfahren zur thermischen Entsorgung von Abfallstoffen bzw. Reststoffen wie z. B. Aschen, Klärschlamm oder dergleichen, unter Bildung einer schadstoffarmen deponiefähigen bzw. verwertbaren Schlacke und eines verwertbaren Abgases.

Die Lagerung von Abfallstoffen wie z. B. Klärschlamm oder Reststoffen wie z. B. Räumaschen, das sind Reststoffe der thermischen Zinkgewinnung, im Freien schafft Probleme der Umweltbelastung. Die wirtschaftliche thermische Entsorgung solcher Stoffe mit dem Ziel, Produkte herzustellen, die weiterverwendet oder zumindest ohne Umweltbelastung deponiert werden können, macht aber Schwierigkeiten. So ist es zwar bekannt (DE-OS 37 29 210), Abfallstoffe wie getrockneten Klärschlamm bei hohen Temperaturen oberhalb 1.500° C in einem Schmelzzyklon zu verbrennen unter Bildung einer schadstoffarmen schmelzflüssigen Schlacke und eines heißen Abgases, in welch letzteres sich die im Klärschlamm enthaltenen umweltschädigenden Elemente verflüchtigen, wonach diese Elemente aus dem Abgas stufenweise abgetrennt werden. Jedoch ist dieses Verfahren nur dann durchführbar, wenn das Aufgabegut eine Korngröße von maximal 1,0 mm sowie eine Feuchte von maximal 1 bis 5 % aufweist, weil ein Schmelzzyklon mit gröberem und feuchterem Aufgabegut nicht mehr betrieben werden kann. Viele zu entsorgenden Abfallstoffe bzw. Reststoffe haben aber eine höher liegende Korngröße und/oder Feuchte, so daß solche Stoffe in einem Schmelzzyklon nur nach vorangegangener Zerkleinerung bzw. Mahlung und/oder Trocknung entsorgt werden können, wodurch die Wirtschaftlichkeit der bekannten Entsorgung beeinträchtigt werden kann.

Der Erfindung liegt die Aufgabe zugrunde, ein möglichst einstufiges Verfahren zu schaffen, mit dem die eingangs genannten Abfallstoffe bzw. Reststoffe umweltverträglich und doch wirtschaftlich thermisch entsorgt und gegebenenfalls in wiederverwendbare Materialien umgewandelt werden können, ohne daß die zu entsorgenden Stoffe vorher zerkleinert und/oder getrocknet werden müssen.

Diese Aufgabe wird gemäß der Erfindung mit den Maßnahmen des Kennzeichnungsteiles des Anspruchs 1 gelöst.

Das erfindungsgemäße Verfahren ist besonders wirtschaftlich anwendbar auf die Entsorgung feuchter und/oder sehr schadstoffhaltiger Abfallstoffe bzw. Reststoffe wie z. B. im Freien auf Halde gelagerte Räumasche, die eine Feuchte von ca. 40 % haben kann und die ein Reststoff der thermischen Zinkgewinnung ist, ferner auf zink- und bleihaltige Stäube und Schlämme aus der Abgasreinigung in Betrieben der Eisen- und Stahlerzeugung, auf Schlämme aus Gichtgaswäschen, auf im Freien gelagerten feuchten Walzenzunder, auf kommunalen Klärschlamm, auf kunststoffhaltige Abfälle und Reststoffe, auf Aschen der Müllverbrennung usw. Alle diese Stoffe müssen vor der erfindungsgemäßen Entsorgung nicht feinzerkleinert und/oder getrocknet werden. Der aus der Feuchte des Aufgabegutes im Herdofen der Schlackenschmelze entstehende Wasserdampf entweicht der Beschickung überraschenderweise nicht explosionsartig unter Mitnahme von Aufgabegut in den Abgasstrom, sondern wird ohne weiteres von diesem aufgenommen und abtransportiert. Dieses Abgas wird wenigstens zwei Sekunden lang auf einer Temperatur von wenigstens 800° C gehalten, so daß die besonders im Klärschlamm enthaltenen überriechenden Stoffe zersetzt bzw. die daraus entstehenden geruchsbelästigenden Abgase mit Sicherheit desodoriert werden. Besonders bei zu entsorgenden kunststoffhaltigen Abfallstoffen bzw. Reststoffen wird das im Herdofen entstehende Abgas wenigstens zwei Sekunden lang auf einer Temperatur oberhalb ca. 1.200° C gehalten, so daß gefährliche Giftstoffe wie z. B. Dioxine und/oder Furane mit Sicherheit zerstört werden. Die aus dem Herdofen abgezogene Schlacke, deren Schmelztemperatur je nach Einsatzgut in einem Bereich von ca. 1.000° C bis ca. 1.600° C liegen kann, ist im Vergleich zum Einsatzgut dicht und vor allem eluierfest bzw. laugungsresistent. Die zu entsorgenden Abfallstoffe bzw. Reststoffe, die zunächst auf der Oberfläche der Schlackenschmelze des Herdofens schwimmen, enthalten in der Regel Kohlenstoff, der durch Aufblasen eines $O_2$-haltigen Gases unter Bildung einer vorzugsweise reduzierenden Atmosphäre verbrannt wird, in welcher die in den zu entsorgenden Stoffen wie z. B. Räumaschen enthaltenen oxidischen Stoffkomponenten wie z. B. Zink und/oder Blei reduzierend verflüchtigt werden, wonach das Abgas in ein und demselben Herdofen unter Zufuhr eines weiteren $O_2$-haltigen Gases unter Ausfall von staubförmigem Zink und/oder Blei nachverbrannt wird, so daß das erfindungsgemäße Verfahren auch geeignet ist, Abfallstoffe bzw. Reststoffe umweltfreundlich zu entsorgen und gleichzeitig auch noch Zink und/oder Blei sowie gegebenenfalls weitere Metalle zu gewinnen.

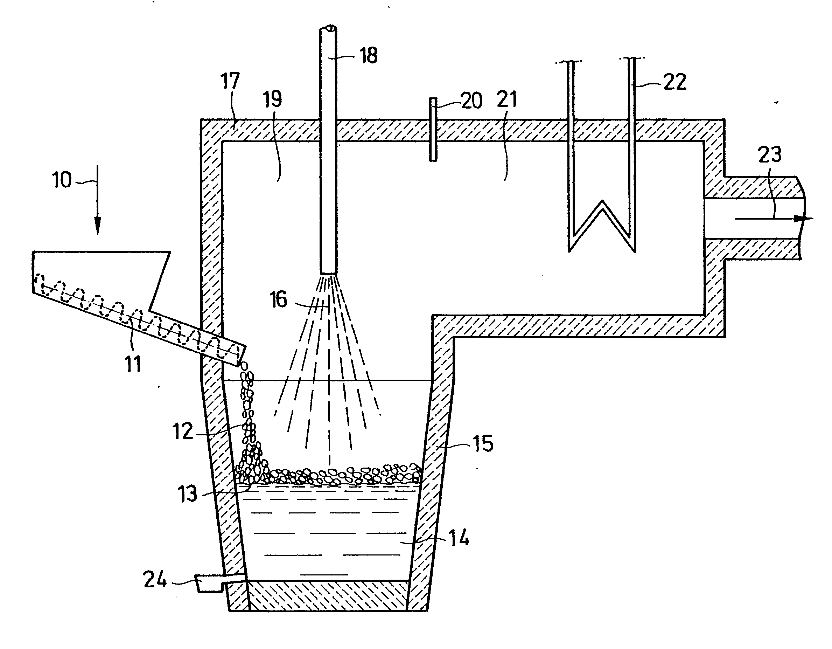

Die Erfindung und deren weiteren Merkmale und Vorteile werden anhand des in der Zeichnung schematisch dargestellten Ausführungsbeispieles näher erläutert.

Nach dem Ausführungsbeispiel der Zeichnung wird der zu entsorgende Abfallstoff bzw. Reststoff (10), z. B. im Freien gelagerte Räumasche als Reststoff der thermischen Zinkgewinnung mit einer Feuchte von ca. 40 %, gegebenenfalls mit Zuschlägen wie Flußmittel sowie gegebenenfalls mit Zusatzbrennstoff über eine Beschickungsvor richtung (11) ohne vorherige Zerkleinerung und ohne vorherige Trocknung, also in Form von Klumpen (12) auf die Oberfläche (13) einer etwa 1.300° C heißen Schlackenschmelze (14) eines Herdofens (15) aufgegeben und geschmolzen. Der Wassergehalt des Aufgabegutes wird sofort als Wasserdampf in das Abgas aufgenommen. Zunächst schwimmt das Aufgabegut auf der Oberfläche (13) der Schlackenschmelze (14). Der im Aufgabegut enthaltene Kohlenstoff wird durch Aufblasen eines $O_2$-haltigen Gases (16) (Luft, Sauerstoff) mittels wenigstens einer durch das Ofengewölbe (17) hindurchgeführten und gegebenenfalls höhenverstellbaren Aufblaslanze (18) an der angetrockneten Oberfläche unter Bildung einer reduzierenden Atmosphäre verbrannt, in welcher oxidische Stoffkomponenten des Aufgabegutes wie Zink und/oder Blei reduzierend verflüchtigt werden. Der Ausbrand des Kohlenstoffs ist vollständig, da die Schlacke nur kleiner 0,1 % C enthält. Der Zusatz von Brennstoff zum Aufgabegut erfolgt wahlweise. Zur Regulierung des Schmelzpunktes der Schlakkenschmelze (14) kann dem Aufgabegut (10) Eisenerz und/oder Zement zugegeben werden. Wenigstens ein Teil des im Aufgabegut enthaltenen Schwefels wird als Eisensulfid in der Schlackenschmelze (14) gebunden und nicht mit dem Abgas emittiert. Das oberhalb der Schlackenschmelze (14) entstehende Abgas (19) wird wenigstens zwei Sekunden lang auf einer Temperatur von wenigstens 800° C gehalten. In ein und demselben Ofen (15) wird das Abgas unter Zufuhr eines weiteren z. B. über Lanze (20) eingeblasenen $O_2$-haltigen Gases unter Ausfall von staubförmigem Zink und/oder Blei im Ofenraum (21) nachverbrannt. Danach wird das Abgas nach Abkühlung im Gaskühler (22) bei (23) der nicht dargestellten Abgasreinigung zugeführt. Mit (24) ist der Schlackenabstich des Herdofens (15) angezeigt. Die Schlacke ist eluierfest bzw. laugungsresistent.

Bei einem Versuchsbetrieb des erfindungsgemäßen Verfahrens wurden 1.000 g Räumaschemischung (10) zu ca. 420 g Schlacke (24) umgewandelt. Über 90 % des in der Räumasche enthaltenen Zinks und Bleis konnten aus der festen Phase entfernt werden.

Sollte der feinkörnige Anteil des Aufgabegutes (12) im Herdofen (15) verstauben, so kann zur Unterdrückung der Verstaubung dem zu entsorgenden Abfallstoff bzw. Reststoff (10) eine thermisch stabile Agglomerierhilfe zugemischt werden, z. B.

Natriumsilikat (Wasserglas), Salze wie Eisensulfat, Zinksulfat sowie andere geeig nete Stoffe. Natriumsilikat ist wasserlöslich und es hat sich gezeigt, daß sich Natriumsilikat beim Einmischen homogen im feuchten Material (10) verteilt. Die Menge des zugemischten Natriumsilikats betrug 5 % bezogen auf die Trockenmasse des feuchten Aufgabeguts (10).

Durch den mit dem Herdofen (15) integrierten Nachverbrennungsraum (21) erhält die Anlage zur Durchführung des erfindungsgemäßen Verfahrens kompakte Ausmaße; der Wärmeinhalt der Abgase (19) des Schmelzgefäßes und deren unverbrannter Anteil werden zur Einstellung des Temperatur-Zeitprofils (größer 800 bzw. 1.200° C/2 Sekunden) genutzt. Die sichere Zersetzung der geruchsbelästigenden Stoffe bzw. die sichere Zerstörung von Dioxinen und Furanen im Abgas wird von den Aufsichtsbehörden gefordert. Andersartige konventionelle Anlagen benötigen dazu besondere Zusatzfeuerungen. Der dafür sonst erforderliche Brennstoffaufwand wird erfindungsgemäß bei der primären Verbrennung im Schmelzprozeß genutzt, um anstelle einer Asche eine flüssige Schlacke (14, 24) zu erhalten, die nach der Erstarrung als Baumaterial verwendet werden kann.

## Ansprüche

1. Verfahren zur thermischen Entsorgung von Abfallstoffen bzw. Reststoffen wie z. B. Aschen, Klärschlamm oder dergleichen, unter Bildung einer schadstoffarmen deponiefähigen bzw. verwertbaren Schlacke und eines verwertbaren Abgases, gekennzeichnet durch folgende in einem einzigen Reaktor zusammengefaßten Stufen:

a) die Stoffe werden auf die Oberfläche (13) einer Schlackenschmelze (14) eines Herdofens (15) aufgegeben und geschmolzen;

b) der in den Stoffen enthaltene Kohlenstoff wird durch Aufblasen eines $O_2$-haltigen Gases (16) unter Bildung einer reduzierenden Atmosphäre verbrannt, in welcher oxidische Stoffkomponenten wie Zink und/oder Blei reduzierend verflüchtigt werden;

c) das Abgas wird wenigstens zwei Sekunden lang auf einer Temperatur von wenigstens 800° C bzw. wenigstens 1.200° C gehalten;

d) das Abgas wird unter Zufuhr eines weiteren $O_2$-haltigen Gases unter Ausfall von staubförmigem Zink und/oder Blei nachverbrannt.

2. Verfahren nach Anspruch 1, dadurch gekennzeichnet , daß die Abfallstoffe bzw. Reststoffe (10) (Aufgabegut) vor ihrem Einsatz nicht zerkleinert bzw. gemahlen und nicht getrocknet werden.

3. Verfahren nach Anspruch 1, dadurch gekennzeichnet , daß wenigstens ein Teil des in den Abfallstoffen bzw. Reststoffen enthaltenen Schwefels als Eisensulfid in der Schlackenschmelze (14) gebunden wird.

4. Verfahren nach Anspruch 1, dadurch gekennzeichnet , daß zur Unterdrückung der Verstaubung des feinkörnigen Anteils des Aufgabegutes diesem eine thermisch stabile Agglomerierhilfe zugemischt wird.

5. Verfahren nach Anpruch 4, dadurch gekennzeichnet , daß als Agglomerierhilfe Natriumsilikat, Salze wie Eisensulfat, Zinksulfat sowie andere geeignete Stoffe verwendet werden.

EP 0 405 124 A2